# EUROPÄISCHE PATENTSCHRIFT

(11) **EP 3 670 986 B1**
(45) Veröffentlichungstag und Bekanntmachung des Hinweises auf die Patenterteilung: **07.06.2023**
(21) Anmeldenummer: 18213040.1
(22) Anmeldetag: 17.12.2018
(51) Int. Cl.: F16L 5/00, F16L 5/10, H02G 3/22

(54) **MONTAGE EINER LEITUNG IN EINER ÖFFNUNG IN EINEM WAND- ODER BODENELEMENT**
ASSEMBLY OF A LINE IN AN OPENING IN A WALL OR FLOOR ELEMENT
MONTAGE D'UNE CONDUITE DANS UNE OUVERTURE D'UN ÉLÉMENT MURAL OU AU SOL

(43) Veröffentlichungstag der Anmeldung: 24.06.2020
(73) Patentinhaber: Hauff-Technik GmbH & Co. KG, 89568 Hermaringen (DE)
(72) Erfinder: DELIKOSTAS, Christos, 89537 Giengen (DE); BURKHARDT, Andreas, 89555 Heidenheim (DE)
(74) Vertreter: König Szynka Tilmann von Renesse Patentanwälte Partnerschaft mbB München

(56) Entgegenhaltungen:
- EP-A2- 2 570 708
- DE-A1- 3 107 370
- DE-A1- 3 213 414
- DE-U1-202014 010 127
- FR-A3- 2 746 460
- JP-A- 2015 105 729
- US-A- 5 171 164
- US-B1- 6 359 224

## Beschreibung

Die vorliegende Erfindung betrifft die Montage einer Leitung in einer Öffnung in einem Wand- oder Bodenelement.

Eine bekannte Möglichkeit zur Montage einer Leitung in einem Wand- oder Bodenelement besteht in der Verwendung einer sogenannten Pressdichtung. Diese weist einen Elastomerkörper mit einer Durchgangsöffnung für die Leitung, sowie an beiden Stirnseiten des Elastomerkörpers angeordnete Spannplatten auf. Diese können durch Anziehen von Spannbolzen axial aufeinander zubewegt werden, womit der Elastomerkörper axial gestaucht und folglich radial geweitet wird. Er legt sich nach radial innen dichtend an die Leitung und nach radial außen dichtend an eine die Öffnung begrenzende Laibung an. Exemplarisch wird verwiesen auf die EP 2 131 085 A1.

Die US 5,171,164 A betrifft einen Federstahladapter, mit dem ein Verbinder in der Gehäusewand einer elektrischen Verteilerdose montiert wird.

Die DE 31 07 370 A1 betrifft einen Verspannungsring, mit dem ein Metallrohr durch einen Quetschsitz in einer Metallwand montiert wird.

Die EP 2 570 708 A2 betrifft eine Brandschutzmanschette, die von oben in den Ringraum eingesetzt wird, der sich um ein durch eine Bodenöffnung hindurch verlegtes Rohr erstreckt.

Die FR 2 746 460 A3 betrifft einen Dichtstopfen zum Einsetzen in eine Öffnung.

Die US 6,359,224 B1 beschreibt eine Hülse, die aus einem leitfähigen Elastomer vorgesehen ist und der Anbindung an einen Kabelschirm dient.

Die JP 2015 105729 A betrifft eine Elastomerhülse mit umlaufenden Stegen, die dem Zusammenstecken zweier Rohre dient.

Die DE 20 2014 010 127 U1 betrifft eine Durchführung, die mit einem Zweikomponentenharz durch Verschäumen in einer Öffnung montiert wird.

Der vorliegenden Erfindung liegt das technische Problem zugrunde, eine vorteilhafte Möglichkeit zur Montage einer Leitung in einer Öffnung in einem Wand- oder Bodenelement anzugeben.

Dies wird erfindungsgemäß mit der Verwendung gemäß Anspruch 1 gelöst, also der Verwendung eines Arretierungsrings. Diese verspreizt sich und hält in einer verspreizten Stellung die Leitung in der Öffnung. Dabei nimmt er diese verspreizte Stellung selbsttätig ein, was eine besonders einfache und schnelle Montage ermöglichen kann.

Bevorzugte Ausgestaltungen finden sich in den abhängigen Ansprüchen und der gesamten Offenbarung, wobei in der Darstellung der Merkmale nicht immer im Einzelnen zwischen Verfahrens- bzw. Verwendungs- oder Vorrichtungsaspekten unterschieden wird; jedenfalls implizit ist die Offenbarung hinsichtlich sämtlicher Anspruchskategorien zu lesen. Wird also bspw. eine bestimmte Ausgestaltung des Arretierungsrings unter Verweis auf Vorteile in einer bestimmten Anwendung beschrieben, ist dies auch als Offenbarung einer entsprechenden Verwendung zu verstehen.

Vor der Diskussion unterschiedlicher Ausgestaltungen des Arretierungsrings werden zunächst nochmals die Vorteile anhand einer konkreten Anwendung illustriert. So wird bei der nachträglichen Verlegung einer Datenkabelleitung in ein Gebäude zunächst ein Loch durch die Gebäudeaußenwand gebohrt, in dem dann eine Hülse befestigt wird, und zwar in der Regel durch Ausschäumen des Ringraums zwischen Hülse und Laibung der Bohrung. Damit die Hülse beim Einbringen des Schaummaterials nicht verrutscht, kann die Hülse von einer Spannvorrichtung in Position gehalten werden. Diese kann dazu temporär auf die Hülse geschraubt werden, was zwar einen sicheren Halt ergibt, aber auch Montageaufwand bedeutet (Aufschrauben und danach wieder Abschrauben).

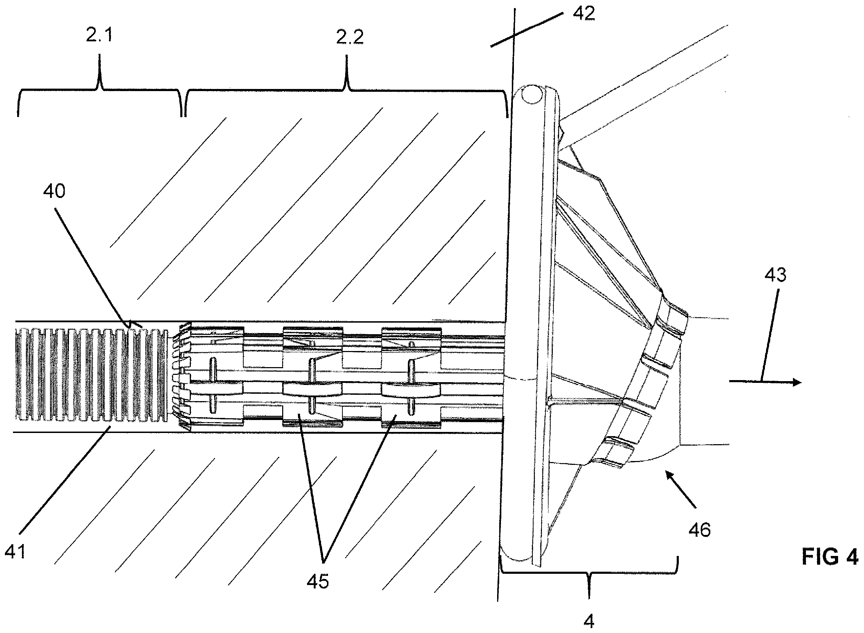

Erfindungsgemäß kann hingegen der Arretierungsring die Hülse beim Ausschäumen in Position halten, vergleiche Figur 4 zur Illustration. Die Hülse kann bspw. samt darauf platziertem Arretierungsring einfach in die Bohrung eingeschoben werden, dieser verkrallt sich dann an der Laibung und wirkt damit einem Ausziehen in entgegengesetzter Richtung entgegen. Dies ist schon für sich ein vereinfachter Vorgang, zudem kann der Arretierungsring danach auch schlichtweg in der Öffnung verbleiben.

Wie dieses Beispiel illustriert, kann es sich bei der "Leitung" nicht nur um die medienführende Leitung bzw. das Kabel selbst, sondern auch um ein Leerrohr (eine Hülse) handeln, durch welche dann später die eigentliche Leitung hindurchgeführt wird. Bei letzterer kann es sich um ein medienführendes Rohr, z. B. für Gas, Wasser oder Fernwärme, handeln, oder um ein Kabel, z. B. ein Strom- oder Datenkabel (Internet/Telefonie). Das vorherige Montieren des Leerrohres kann bspw. insoweit von Vorteil sein, als damit eine im Vergleich zur Laibung einer Bohrung definierte Grenzfläche geschaffen wird. Mit dem Arretierungsring kann aber selbstverständlich auch direkt die eigentliche Leitung selbst (Kabel oder medienführendes Rohr) montiert werden, dieser kann sich insbesondere an einer Außenwand davon verkrallen (siehe unten im Detail).

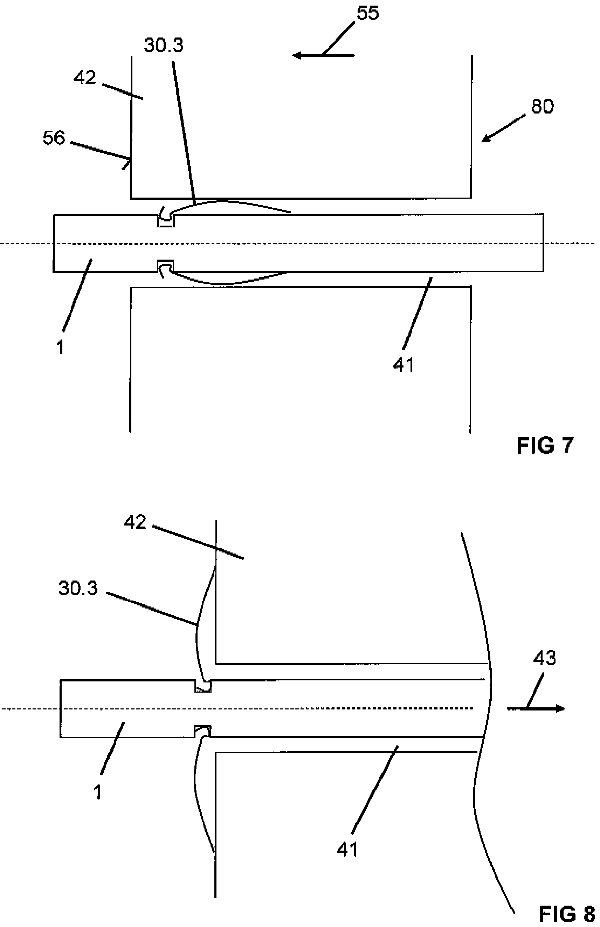

Wie nachstehend im Einzelnen deutlich wird, kann sich das hauptanspruchsgemäße Verspreizen des Arretierungsrings auf unterschiedliche Kontakt- bzw. Gegenlagerflächen beziehen. Eine Fixierung relativ zum Wand- oder Bodenelement kann sich nicht nur durch das bereits erwähnte Verkrallen an der Laibung ergeben, sondern auch durch eine Anlage an einer Seitenfläche des Wand- oder Bodenelements, vergleiche Figur 8 zur Illustration. Alternativ oder zusätzlich zu einer Verspreizung gegenüber dem Wand- oder Bodenelement kann sich der Arretierungsring auch an der Leitung verspreizen, sich also an einer Außenfläche davon anlegen und in einer Blockagerichtung einem Axialversatz entgegenwirken.

Um genau eine der beiden Alternativen (nicht die Kombination) zu realisieren, könnte der Arretierungsring bspw. als Einlegeteil in eine Kunststoffhülse eingespritzt sein und dabei nur nach innen oder außen hervortretende Verkrallungsstege aufweisen. Es könnte dann bspw. eine entsprechende Hülse, die nur außenseitig Verkrallungsstege aufweist, auf die Leitung geklebt und dann samt Leitung in die Öffnung gesetzt werden (dort schaffen dann die Verkrallungsstege die Relativfixierung).

Dieses Prinzip bedeutet in allgemeinen Worten, dass mit dem Arretierungsring ein Befestigungskörper (im vorherigen Absatz die spritzgegossene Hülse) an dem Wand- oder Bodenelement befestigt wird, wobei die andere Verbindung (zwischen Befestigungskörper und Leitung) dann gesondert hergestellt wird, im Beispiel von eben durch das Aufkleben des Befestigungskörpers. Der Befestigungskörper könnte aber bspw. auch intrinsisch ein Befestigungsmittel mitbringen, z. B. mit einer mit Harz gefüllten Kammer versehen sein, die bei der Montage geöffnet wird (aufgestoßen/-gebrochen). Bevorzugt ist jedoch ein Arretierungsring, der sich sowohl relativ zum Wand- oder Bodenelement als auch relativ zur Leitung verspreizt, was gegenüber den eben geschilderten Varianten einen einfachen Aufbau und auch eine einfache Montage ergeben kann.

Erfindungsgemäß wird der Arretierungsring an oder in die Öffnung gesetzt, besteht also die Öffnung beim Platzieren des Arretierungsrings bereits. Der Arretierungsring wird entweder in die bestehende Öffnung eingesetzt, sodass er in der verspreizten Stellung innerhalb der Öffnung angeordnet ist, oder an die Öffnung angesetzt. Letzteres meint, dass jedenfalls ein Abschnitt des Arretierungsrings, insbesondere die Verkrallungsstege, oder auch der gesamte Arretierungsring in der verspreizten Stellung axial auf die Öffnung folgend angeordnet ist, vergleiche Figur 8 zur Illustration. Die Öffnung kann zuvor durch Bohren oder Eingießen/- betonieren eines Futterrohres hergestellt werden.

Erfindungsgemäß wird der Arretierungsring gemeinsam mit der Leitung eingesetzt, sitzt er also bspw. auf der Außenwand der Leitung (insbesondere Hülse, siehe vorne), wenn diese in die Öffnung eingeschoben wird. Dies kann bspw. mit Blick auf die vereinfachte Handhabung bzw. Montage von Vorteil sein.

Die Öffnung, an bzw. in welche der Arretierungsring gesetzt wird, ist erfindungsgemäß eine Öffnung in einem Wand- oder Bodenelement eines Gebäudes, bspw. in einer Zwischendecke oder Innenwand, bevorzugt in einer Gebäudeaußenwand. Das Bodenelement kann bspw. aus Beton vorgesehen sein, bei der Wand kann es sich um eine Ziegel- oder Betonwand handeln.

Bevorzugt ist bzw. wird die Öffnung als Bohrung in das Wand- oder Bodenelement eingebracht, wobei es sich auch um eine Kernlochbohrung handeln kann. Die Bohrung kann bspw. einen Durchmesser von mindestens 5 mm, 10 mm bzw. 15 mm haben, mit möglichen Obergrenzen bei bspw. höchstens 500 mm, 400 mm, 300 mm, 200 mm bzw. 150 mm. Es können aber auch kleinere Maximaldurchmesser bevorzugt sein, bspw. von höchstens 50 mm, 40 mm bzw. 30 mm.

Wie bereits erwähnt, wird die selbsttätige Verspreizung des Arretierungsrings erfindungsgemäß mit Verkrallungsstegen erreicht.

Generell beziehen sich die Angaben "axial", "radial" bzw. "umlaufend", sowie die zugehörigen Richtungen (Axialrichtung etc.), auf die Mittenachse der Öffnung in dem Wand- oder Bodenelement. Entlang der Mittenachse erstreckt sich die Öffnung von einer Seite des Wand- oder Bodenelements zur entgegengesetzten; die Laibung der Öffnung ist um die Mittenachse bevorzugt zumindest drehsymmetrisch, besonders bevorzugt ist sie rotationssymmetrisch (ist die Mittenachse also eine Achse der Rotationssymmetrie). Ohne ausdrücklich gegenteilige Angabe beziehen sich "innen" und "außen" auf die Mittenachse der Öffnung, ist also eine Innenfläche der Mittenachse zugewandt und meint "nach innen" radial zur Mittenachse hin, wohingegen eine Außenfläche der Mittenachse radial abgewandt ist und "nach außen" radial von der Mittenachse weg meint.

Die "selbsttätige" Verspreizung kann insbesondere bedeuten, dass der Arretierungsring die verspreizte Stellung mit bzw. bei dem Einschieben der Leitung in die Öffnung automatisch einnimmt, also nicht mit einem gesonderten Werkzeug verspannt werden muss. Eine Formänderung, mit welcher der Arretierungsring in die verspreizte Stellung übergeht, kann über eine dem Arretierungsring inhärente Vorspannung (Federkraft) und/oder die beim Einschieben der Leitung in die Öffnung aufgebrachte Kraft getrieben sein. Der Arretierungsring kann die Leitung in der verspreizten Stellung bspw. insofern "halten", als eine zum Einschieben der Leitung notwendige Kraft (wobei der Arretierungsring die verspreizte Stellung einnimmt) kleiner als eine zum Ausziehen der Leitung notwendige Kraft ist (wenn der Arretierungsring in der verspreizten Stellung ist).

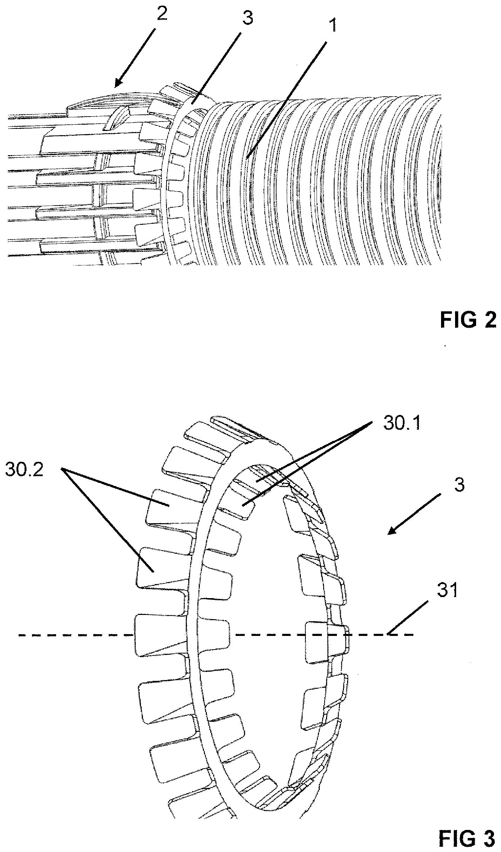

Die erfindungsgemäß vorgesehenen Verkrallungsstege treten nach innen oder außen hervor, der Arretierungsring kann auch kombiniert nach innen und außen hervortretende Verkrallungsstege aufweisen, vergleiche Figur 2 zur Illustration. Ein jeweiliger Verkrallungssteg hat dann also jeweils eine radiale Erstreckung und zumindest in der verspreizten Stellung anteilig auch eine axiale Erstreckung. In einem Axialschnitt betrachtet (die Schnittebene beinhaltet die Mittenachse) erstreckt er sich also schräg zur Mittenachse zu seinem freien Ende hin, wobei speziell in der verspreizten Stellung der Winkel auch vergleichsweise klein sein kann. Mit dem freien Ende kann sich der jeweilige Verkrallungssteg dann je nach Variante bspw. an der Außenwand der Leitung oder an der Laibung verkrallen.

Die Verkrallungswirkung kann sich bspw. infolge einer gewissen Unebenheit der Laibung ergeben (speziell bei Ziegel, aber auch bei einer Bohrung in Beton). Im Falle der Leitung kann sich die Verkrallungswirkung bspw. auch daraus ergeben, dass ein Kunststoffmaterial die Außenwand der Leitung bildet. Im Falle von Verkrallungsstegen aus Kunststoff könnten diese dann aus einem im Vergleich härteren Kunststoffmaterial vorgesehen sein (mit größerer Shore-Härte), besonders gut können sich jedoch bspw. Verkrallungsstege aus Metall an einer solchen Leitung verkrallen.

Alternativ oder auch zusätzlich zu einem Verkrallen an der Laibung kann sich der Arretierungsring in der verspreizten Stellung auch an einer Seitenwandfläche des Wand- oder Bodenelements abstützen. Der Arretierungsring kann dabei auch zusätzlich an der Seitenfläche befestigt werden, bspw. angeschraubt oder mit einem Steckdübel fixiert werden. Bevorzugt wird der Arretierungsring zuerst an der Seitenfläche befestigt und wird erst danach die Leitung hindurchgeführt (was von der Seite, an welcher der Arretierungsring befestigt ist, oder auch der entgegengesetzten Seite her erfolgen kann).

Bei einer anderen bevorzugten Ausführungsform wird der sich an der Seitenfläche abstützende Arretierungsring aus der Öffnung heraus in die verspreizte Stellung geschoben. Solange der Arretierungsring in der Öffnung sitzt, hält deren Laibung die Verkrallungsstege des Arretierungsrings radial beisammen, die Verkrallungsstege weiten sich dann mit dem Herausrutschen des Arretierungsrings unter ihrer eigenen Federkraft. Sie übergreifen dann also die Öffnung nach außen und können entsprechend axial in die Anlage an die Seitenfläche gezogen werden (durch einen axialen Zug der Herausschieberichtung entgegengesetzt).

Bevorzugt kann diese Variante dahingehend genutzt werden, dass der Arretierungsring durch die Öffnung hindurchgeschoben wird. Es wird also von jener Seite her in die Öffnung eingeschoben, die der Seitenfläche, an welche er sich in der verspreizten Stellung abstützt, entgegengesetzt liegt. Dies kann bspw. eine Montage von nur einer Seite des Wand- oder Bodenelements aus ermöglichen, was den Montageaufwand verringern bzw. bei beschränkter Zugänglichkeit eine entsprechende Montage erst ermöglichen kann.

Die in bevorzugter Ausgestaltung vorgesehenen, nach innen hervortretenden Verkrallungsstege wurden bereits erwähnt. Sie können für sich oder auch in Kombination mit nach außen hervortretenden Verkrallungsstegen vorgesehen sein. Die jeweils umlaufend aufeinanderfolgend vorgesehenen Verkrallungsstege sind bevorzugt jeweils drehsymmetrisch zueinander um die Mittenachse, sie können also jeweils einen Kranz bilden. Der Arretierungsring kann dann einen Kranz mit nach außen hervortretenden Verkrallungsstegen und/oder einen Kranz mit nach innen hervortretenden Verkrallungsstegen aufweisen, vergleiche Figur 2 zur Illustration.

Gemäß einer bevorzugten Ausführungsform weist der Arretierungsring auch axial aufeinanderfolgend angeordnete Verkrallungsstege auf. Es sind also axial aufeinanderfolgend mehrere Kränze mit nach innen hervortretenden Verkrallungsstegen und/oder mehrere Kränze mit nach außen hervortretenden Verkrallungsstegen vorgesehen, dem Gebiss eines Haifisches vergleichbar. Damit kann sich zunächst schon die Verkrallungs- bzw. Axialfixierungswirkung erhöhen lassen. Die axial aufeinanderfolgenden Verkrallungsstege können auch unterschiedlich weit nach innen bzw. außen hervortreten, es können sich also die Kränze in ihren Durchmessern unterscheiden. Dies kann die Einsatzmöglichkeiten des Arretierungsrings hinsichtlich Öffnungen mit unterschiedlichen Innendurchmessern und/oder Leitungen mit unterschiedlichen Außendurchmessern erhöhen.

Generell kann ein Kranz mit Verkrallungsstegen umlaufend bspw. mindestens 5, 10, 15 bzw. 20 Verkrallungsstege aufweisen, mit möglichen Obergrenzen bei z. B. höchstens 300, 200, 150 bzw. 100 Verkrallungsstegen. Sind mehrere Kränze axial aufeinander folgend vorgesehen, können diese mit Blick auf eine insgesamt nicht zu komplexe Struktur bspw. höchstens 10, 8 bzw. 6 Kränze sein (mit möglichen Untergrenzen bei mindestens 2 bzw. 3).

Wie bereits erwähnt, können die Verkrallungsstege, egal ob sie an einer Seitenfläche der Wand, der Laibung oder der Leitung anliegen, bevorzugt eine Axialsicherung schaffen. Wirkt also eine Axialkraft auf die Leitung, wirken die Verkrallungsstege einem Ausziehen der Leitung unter dieser Axialkraft entgegen. Für ein Verkrallen an der Leitung erstreckt sich ein jeweiliger Verkrallungssteg in einem Axialschnitt betrachtet zu seinem freien Ende hin mit einer Axialkomponente, die der Axialkraft entgegengesetzt liegt. Zum Verkrallen an der Laibung erstreckt sich ein jeweiliger Verkrallungssteg hingegen zu seinem freien Ende hin mit einer Axialkomponente, die in Richtung der Axialkraft weist (parallel dazu).

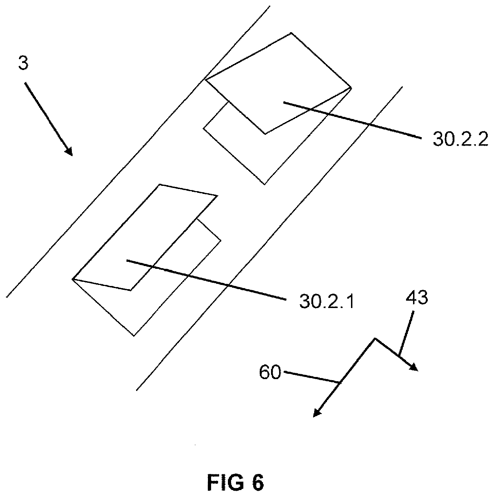

Gemäß einer bevorzugten Ausführungsform wirken zumindest einige der Verkrallungsstege auch einem Verdrehen der Leitung in der Öffnung entgegen. Dabei kann ein jeweiliger Verkrallungssteg so vorgesehen sein, dass er tatsächlich ausschließlich eine Verdrehsicherung schafft, wenn er sich nämlich zu seinem freien Ende hin in Umlaufrichtung schräg nach innen oder außen erstreckt, vergleiche Figur 6 zur Illustration. Die schräge Erstreckung kann jedoch zusätzlich auch einen Axialanteil haben, sodass der Verkrallungssteg zugleich eine Axialsicherung schafft. Figur 6 illustriert eine Möglichkeit, wie sich mit einem Arretierungsring, der umlaufend aufeinanderfolgend unterschiedliche Verkrallungsstege aufweist, eine Axial- und zugleich Umlauf- bzw. Drehmomentsicherung schaffen lässt.

Wie bereits erwähnt, sind die Verkrallungsstege in bevorzugter Ausgestaltung aus Metall vorgesehen, vorzugsweise ist der Arretierungsring insgesamt ein Metallteil. Bevorzugt kann es sich um ein Stanzbiegeteil handeln, sodass also die Verkrallungsstege aus einem Blech gestanzt und in die gewünschte Form gebogen sind. Je nach Anwendung im Einzelnen kann sich die gewünschte schräge Erstreckung der Verkrallungsstege jedoch bspw. auch erst in der Anwendung ergeben, können sich die Verkrallungsstege also zuvor noch in der Ebene des Bleches erstrecken. Axial gesehen könnte ein entsprechender Arretierungsring mit nach innen gerichteten Verkrallungsstegen bspw. eine Sternform bilden. Durch diese Sternform wird die Leitung eingeschoben, wobei sie die freien Enden der Verkrallungsstege mitnimmt (diese streifen entlang der Außenwand der Leitung). Bei einem axialen Zug in einer der Einschieberichtung entgegengesetzten Richtung verkrallen sich die Stege an der Außenwand der Leitung und blockieren einen Versatz derselben.

Das Vorsehen des Arretierungsrings als Stanz- bzw. Stanzbiegeteil kann von der kostengünstigen Herstellung abgesehen auch eine Flexibilität hinsichtlich des Durchmessers bzw. Umfangs des Arretierungsrings eröffnen. Von einem Bandmaterial ausgehend lässt sich dem gewünschten Umfang entsprechend ein Abschnitt ablängen, der dann durch Biegen in die gewünschte Ringform gebracht werden kann. Hieraus ist ersichtlich, dass der Arretierungsring nicht zwingend ein in sich geschlossener Ring ist, sondern eben bspw. auch einen Stoß aufweisen kann (die gilt ganz allgemein, auch unabhängig von dem Bandmaterial bzw. Stanz-/Stanzbiegeteil). Der Arretierungsring kann sogar auch mehrteilig aufgebaut sein, also aus mehreren umlaufend aufeinander folgenden Teilen (und entsprechend mit mehreren Stößen). Es kann also bspw. mindestens zwei und typischerweise nicht mehr als 10, 8, 6 bzw. 4 umlaufend aufeinanderfolgende Arretierungsringteile geben. Alternativ kann der Arretierungsring aber auch stoßfrei vorgesehen sein, also umlaufend unterbrechungsfrei durchgehend (allgemein und auch im Falle eines Stanz-/Stanzbiegeteils).

Gemäß einer bevorzugten Ausführungsform ist an der Leitung ein Flanschelement vorgesehen, das bevorzugt als gesondertes Teil auf die Leitung aufgesetzt ist. Im montierten Zustand der Leitung, wenn sich also auch der Arretierungsring in der verspreizten Stellung befindet, stützt sich das Flanschelement an einer Seitenwandfläche des Wand- oder Bodenelements ab. Das Flanschelement und der Arretierungsring sind voneinander verschiedene Teile. Das Flanschelement kann insbesondere so montiert sein, dass es eine Axialkraft auf die Leitung bewirkt, wobei der Arretierungsring die Leitung dann gegen diese Axialkraft in der Öffnung hält. Ist also bspw. ein sich an der Seitenfläche abstützender Arretierungsring vorgesehen, ist das Flanschelement an der entgegengesetzten Seitenfläche angeordnet.

Axial gesehen kann das Flanschelement die Öffnung abdecken (von einem Durchgangsloch für die Leitung abgesehen). Es erstreckt sich dabei radial noch weiter nach außen, bevorzugt hat es eine umlaufend geschlossene Anlagefläche an der Seitenfläche des Wand- oder Bodenelements. Das Flanschelement kann bspw. aus einem Elastomermaterial vorgesehen sein, was die eben geschilderte Montage mit einem gewissen axialen Zug ermöglichen kann. Im Bereich des Durchgangslochs für die Leitung kann ein solches Flanschelement bspw. einen axial hervortretenden Kragen aufweisen, der mit einem Spannmittel auf die Leitung gedrückt werden kann, bspw. einem Spannband bzw. einer Spannschelle.

Das "Elastomermaterial" kann ganz allgemein ein Kunststoff mit elastischem Verhalten sein. Dessen Shore-Härte (Shore A) kann bspw. bei höchstens 90 Shore, 80 Shore, 75 Shore bzw. 70 Shore und (davon unabhängig) bspw. bei mindestens 20 Shore, 25 Shore, 30 Shore, 35 Shore bzw. 40 Shore liegen. Es kann sich bspw. um ein Kautschukmaterial handeln, vorzugsweise um einen Synthesekautschuk, etwa EPDM (Ethylen-Propylen-Dien, M-Gruppe). Ebenso kann es sich aber bspw. auch um einen Thermoplastischen Elastomer (TPE) oder ein Silikonbasiertes Material handeln, etwa Silikonkautschuk bzw. Silikonelastomer.

Das Flanschelement kann aber bspw. auch aus einem Hartkunststoffmaterial vorgesehen sein, etwa aus ABS. Für eine federnde/dichtende Anlage an der Seitenfläche kann es der Seitenfläche zugewandt dann ein umlaufendes Dichtelement aufweisen, z. B. ein Butylband.

Mit der Kombination aus Arretierungsring und Flanschelement lässt sich eine Leitung besonders einfach und schnell montieren, wobei das Flanschelement zugleich auch eine Abdichtung schaffen kann. Im Einzelnen wird bei der Montage die Leitung in die Öffnung eingeschoben, wobei der Arretierungsring bevorzugt bereits auf der Leitung sitzt. Beim Einschieben der Leitung ist bevorzugt (auch) bereits das Flanschelement auf der Leitung angeordnet, es kann für deren Einschieben einen Anschlag darstellen. Im Falle des federnd gestalteten Flanschelements lässt sich die Leitung dann axial ein Stück weit über die Stelle des Erstkontakts zwischen Flanschelement und Seitenfläche hinausschieben, wodurch in dem Flanschelement eine gewisse Federspannung aufgebaut wird. Diese bewirkt eine Axialkraft, welche den Arretierungsring in die verspreizte Stellung zieht. Zusammengefasst muss die Leitung einfach eingeschoben werden und wird sie dann vom Arretierungsring gehalten, wobei das Flanschelement die Leitung in diese Verkrallung zieht und zugleich die Öffnung dichtet.

Gemäß einer bevorzugten Ausführungsform wird der Arretierungsring als Montagehilfe genutzt, hält also der Arretierungsring für sich die Leitung nur zeitweilig, um einem unbeabsichtigten Herausrutschen während der Montage vorzubeugen. Bevorzugt bleibt der Arretierungsring zwar auch darüber hinaus in Position, wird er also nicht entfernt; die Axialfixierung der Leitung wird jedoch durch ein zusätzliches Befestigungsmittel verstärkt, sie kann bspw. zusätzlich verschraubt werden. Ganz allgemein (auch unabhängig von der Verwendung als Montagehilfe) kann der Arretierungsring aus der verspreizten Stellung auch wieder gelöst werden, bspw. durch Einschieben einer Hülse zwischen die Verkrallungsstege und die Leitung oder Laibung; bevorzugt verbleibt der Arretierungsring jedoch in der verspreizten Stellung.

In bevorzugter Ausgestaltung ist das Befestigungsmittel ein Schaummaterial, das an die Leitung injiziert wird und sich dann bspw. zumindest ein Stück weit in die Öffnung hinein erstreckt, also den Ringraum zwischen Leitung und Laibung ausfüllt. Das Schaummaterial kann bspw. auf Harzbasis vorgesehen sein, bspw. als Zwei-Komponentenmaterial.

Im Folgenden wird die Erfindung anhand von Ausführungsbeispielen näher erläutert, wobei die einzelnen Merkmale im Rahmen der nebengeordneten Ansprüche auch in anderer Kombination erfindungswesentlich sein können und auch weiterhin nicht im Einzelnen zwischen den unterschiedlichen Anspruchskategorien unterschieden wird.

Im Einzelnen zeigt
- Figur 1: eine Leitung mit einem Arretierungsring zum Einsetzen in eine Wandöffnung;
- Figur 2: eine Detailansicht zu Figur 1, die den Arretierungsring auf einer Außenwand der Leitung zeigt;
- Figur 3: den Arretierungsring gemäß Figur 2 ohne die Leitung;
- Figur 4: die Anordnung gemäß Figur 1 im in eine Wandöffnung eingesetzten Zustand;
- Figur 5: in schematischer Darstellung eine andere Leitung, die mit einem Flanschelement und einem Arretierungsring in einer Öffnung montiert ist;
- Figur 6: eine Detailansicht eines Arretierungsrings für eine Axial- und zugleich Umlaufsicherung;
- Figur 7: einen Arretierungsring, der durch die Öffnung hindurchgeschoben wird;
- Figur 8: den Arretierungsring gemäß Figur 7 nach dem Hindurchschieben.

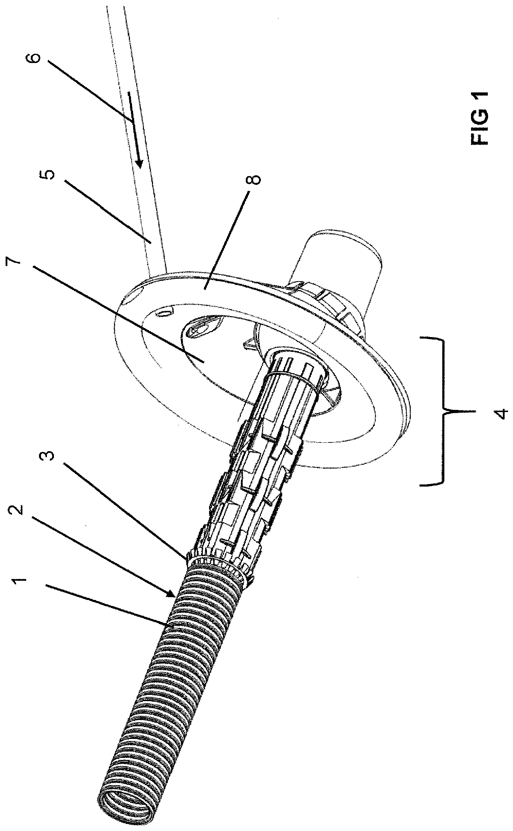

**Figur 1** zeigt eine Leitung 1, auf deren Außenwand 2 ein Arretierungsring 3 gesetzt ist, vergleiche auch die Detaildarstellung gemäß **Figur 2****.** Bei der Leitung 1 handelt es sich vorliegend um eine Hülse (ein Leerrohr) das in eine Bohrung in einer Gebäudeaußenwand gesetzt wird. Durch die Hülse kann dann später die eigentliche Leitung verlegt werden, vorliegend ein Datenkabel (die Hülse schafft für das Hindurchführen und Abdichten desselben eine definierte Grenzfläche).

Wenn die Hülse in die Bohrung eingesetzt ist, begrenzt die Außenwand 2 gemeinsam mit der Laibung der Bohrung einen Ringraum, der bei dieser Bauform mit einem Harzmaterial ausgeschäumt wird. Hierfür ist an einem auf die Leitung 1 aufgesetzten Flanschelement 4, dass dann an einer Seitenfläche der Wand anliegt, ein Injektionsschlauch 5 vorgesehen. Durch diesen kann in einer Injektionsrichtung 6 ein Schaummaterial in einen Innenraum 7 des Flanschelements 4 eingebracht werden, von wo es sich dann in den Ringraum hinein ausbreitet. Das Flanschelement 4 weist ein Dichtelement 8 auf, vorliegend ein Butylband, das an der Seitenfläche der Wand anliegt.

Bei dieser Variante wird der Arretierungsring 3 als Montagehilfe genutzt, er hält die Anordnung aus Leitung 1 und Flanschelement 4 vor bzw. bei dem Verschäumen in Position. Wie **Figur 3** illustriert, weist der Arretierungsring 3 dazu Verkrallungsstege 30 auf. Dabei tritt ein erster Kranz aus Verkrallungsstegen 30.1 nach innen, zur Mittenachse 31 hin hervor. Ein zweiter Kranz aus Verkrallungsstegen 30.2 erhebt sich nach außen, von der Mittenachse 31 weg. Die Verkrallungsstege 30.1 verkrallen sich an der Außenwand 2 der Leitung 1, die Verkrallungsstege 30.2 hingegen an der Laibung 40 der Öffnung 41 in dem Wandelement 42, vergleiche **Figur 4****.** Der Arretierungsring 3 hält die Leitung 1 gegen eine Axialkraft 43 in der Öffnung 41. Damit kann einem Herausrutschen während der Montage, bspw. durch den Druck des Schaummaterials, vorgebeugt werden.

Die Außenwand 2 ist in einem dem Flanschelement 4 distalen Abschnitt 2.1 mit umlaufenden Nuten strukturiert, die ein Ablängen zur Anpassung an eine bestimmte Wanddicke vereinfachen können. In einem dem Flanschelement 4 proximalen Abschnitt 2.2 ist die Außenwand 2 mit Stegen 45 versehen, die das Schaummaterial führen. Ferner ist das Flanschelement 4 über ein Kugelgelenk 46 an der Hülse gelagert, wodurch eine Montage in schrägen Öffnungen 41 möglich wird.

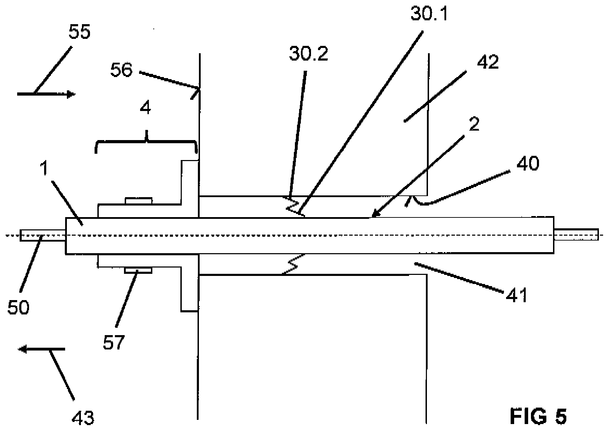

**Figur 5** zeigt in schematischer Darstellung ein Wandelement 42 mit einer Öffnung 41 darin. In dieser wird bzw. ist wiederum eine Leitung 1 montiert, nämlich ein Hohlrohr (eine Hülse). Durch dieses Hohlrohr wird bzw. ist dann im vorliegenden Beispiel ein Datenkabel 50 verlegt, hier ein Glasfaserkabel. Auf der Außenwand 2 der Leitung 1 ist wiederum ein Arretierungsring 3 angeordnet, der mit die Leitung 1 gegen die Axialkraft 43 in Position hält.

Bei der Montage wird die Leitung 1 samt dem auf der Außenwand 2 platzierten Arretierungsring 3 in Figur 5 von links in die Öffnung 41 eingesetzt, in der Einschieberichtung 55 blockiert der Arretierungsring 3 den Axialversatz nicht. Die Leitung 1 kann eingeschoben werden, bis ein auf der Außenwand 2 angeordnetes Flanschelement 4 eine Anlage an der Seitenfläche 56 des Wandelements 42 findet. Das Flanschelement 4 ist mit einem Spannmittel 57, vorliegend eine Spannschelle, auf der Außenwand 2 der Leitung 1 befestigt.

Wenn das Flanschelement 4 die Anlage an der Seitenfläche 56 des Wandelements 42 findet, wird die Leitung 1 noch ein Stück weiter nach rechts geschoben. Dies ist möglich, weil das Flanschelement 4 aus einem Elastomermaterial vorgesehen ist. Zudem kann es in einem radial inneren Abschnitt auch trichterförmig zulaufen (nicht dargestellt), die Trichterform weißt hierbei von der Wand weg. Im fertig montierten Zustand, wenn der Monteur dann also die Leitung 1 wieder loslässt, ergibt sich aufgrund des Elastomermaterials und auch der Form des Flanschelements 4 eine gewisse Rückstellkraft, das Flanschelement 4 setzt die Leitung 1 unter Zug (es bewirkt die Axialkraft 43). Der Arretierungsring 3 hält die Leitung 1 gegen die Axialkraft 43 in Position, er hält in anderen Worten das Flanschelement 4 zuverlässig in der Anlage an der Seitenfläche 56. Es ist eine einfache und gleichwohl definierte Montage möglich.

Bislang wurde die Axialfixierung durch den Arretierungsring 3 diskutiert. **Figur 6** illustriert eine Möglichkeit, wie sich zugleich eine Axial- und auch eine Umlaufsicherung erreichen lassen, also eine Sicherung gegen ein Drehmoment 60. Dabei ist ein Ausschnitt des Arretierungsrings 3 gezeigt, der als Stanzbiegeteil aus einem Blechstreifen hergestellt ist. Dabei sind jeweils mit einem U-förmigen Stanzprofil Inseln freigestanzt, die um die verbleibende Materialbrücke als Gelenk aus der Ebene herausgebogen sind. Vorliegend sind Verkrallungsstege 30.2 gebildet, die sich an der Laibung 40 der Öffnung 41 verkrallen, der Blick fällt also von außen auf den Arretierungsring 3.

Die U-Form des Stanzprofils ist abwechselnd um 90° gedreht, die Verkrallungsstege 30.2.1 dienen wie bisher der Axialfixierung. Die Verkrallungsstege 30.2.2 dienen hingegen als Verdrehsicherung, sie verkrallen sich bei einem auf die Leitung 1 wirkenden Drehmoment an der Laibung 40.

Auch die **Figuren 7 und 8** zeigen einen Arretierungsring 3, der sich im montierten Zustand an der Seitenfläche 56 des Wandelements 42 abstützt. Der Arretierungsring ist allerdings nicht an der Seitenfläche 56 befestigt, er liegt lediglich daran an.

Die Montage erfolgt dabei von der entgegengesetzten Seite 80 des Wandelements 42 her, der Arretierungsring 3 wird durch die Öffnung 41 hindurch geschoben. Dabei werden seine Verkrallungsstege 30.3 beim Hindurchschieben von der Laibung 40 kompakt beisammengehalten, nach dem Austritt aus der Öffnung weiten sie sich, nehmen also die verspreizte Stellung an. Sie sichern die Leitung 1 dann gegen die Axialkraft 43.

## Patentansprüche

1. Verwendung einer Leitung zur Montage (1) in einer Öffnung (41) in einem Wand- oder Bodenelement (42) eines Gebäudes,
und zwar unter Verwendung eines auf der Leitung (1) angeordneten Arretierungsrings (3),
wobei der Arretierungsring (3) gemeinsam mit der Leitung (1) an die Öffnung (41) an- oder in die Öffnung (41) eingesetzt wird und in einer verspreizten Stellung die Leitung (1) in der Öffnung (41) in dem Wand- oder Bodenelement (42) hält,
wobei der Arretierungsring (3) die verspreizte Stellung selbsttätig einnimmt, wozu der Arretierungsring (3), jeweils bezogen auf eine Mittenachse (31) der Öffnung (41), umlaufend verteilt mehrere Verkrallungsstege (30.1,30.2,30.3) aufweist, die nach innen und/oder außen hervortreten.

2. Verwendung nach Anspruch 1, bei welcher die Öffnung (41) eine Bohrung in dem Wand- oder Bodenelement (42) des Gebäudes ist.

3. Verwendung nach Anspruch 1 oder 2, bei welcher der Arretierungsring (3) in der verspreizten Stellung in der Öffnung (41) angeordnet ist und zumindest einige (30.2) der Verkrallungsstege (30.1,30.2,30.3) sich in der verspreizten Stellung an einer die Öffnung (41) begrenzenden Laibung (40) verkrallen.

4. Verwendung nach Anspruch 1 oder 2, bei welcher der Arretierungsring (3) an die Öffnung (41) angesetzt wird und in der verspreizten Stellung an einer Seitenfläche (56) des Wand- oder Bodenelements (42) abstützt.

5. Verwendung nach Anspruch 4, bei welcher der Arretierungsring (3) aus der Öffnung (41) heraus in die verspreizte Stellung geschoben wird, wobei sich zumindest einige (30.3) der Verkrallungsstege (30.1,30.2,30.3) bei dem Herausschieben aus der Öffnung (41) nach außen weiten und unter einem axialen Zug auf die Leitung (1), in einer der Herausschieberichtung (55) entgegengesetzten Richtung, an die Seitenfläche (56) des Wand- oder Bodenelements (42) anlegen.

6. Verwendung nach Anspruch 5, bei welcher der Arretierungsring (3) durch die Öffnung (41) hindurchgeschoben wird, also vor dem Herausschieben von einer der Seitenfläche (56) entgegengesetzten Seite (80) in die Öffnung (41) eingeschoben wird.

7. Verwendung nach einem der vorstehenden Ansprüche, bei welcher zumindest einige (30.1) der Verkrallungsstege (30.1,30.2,30.3) sich in der verspreizten Stellung an einer Außenwand (2) der Leitung (1) verkrallen.

8. Verwendung nach Anspruch 3 oder 7, bei welcher die nach innen oder außen hervortretenden Verkrallungsstege (30.1,30.2) nicht nur umlaufend verteilt sind, sondern auch axial aufeinanderfolgend angeordnet sind.

9. Verwendung nach einem der vorstehenden Ansprüche, bei welcher zumindest einige der Verkrallungsstege (30.1-30.3), wenn eine Axialkraft (43) auf die Leitung (1) wirkt, einem Ausziehen der Leitung (1) unter der Axialkraft (43) entgegenwirken.

10. Verwendung nach einem der vorstehenden Ansprüche, bei welcher zumindest einige der Verkrallungsstege (30.1-30.3), wenn ein Drehmoment (60) auf die Leitung (1) wirkt, einem Verdrehen der Leitung (1) unter dem Drehmoment (60) entgegenwirken.

11. Verwendung nach einem der vorstehenden Ansprüche, bei welcher die Verkrallungsstege (30.1-30.3) aus Metall vorgesehen sind, vorzugsweise der gesamte Arretierungsring (3) aus Metall vorgesehen ist.

12. Verwendung nach Anspruch 11, bei welcher der Arretierungsring (3) ein Stanzbiegeteil ist.

13. Verwendung nach einem der vorstehenden Ansprüche, bei welcher sich ein auf der Leitung (1) angeordnetes Flanschelement (4) an einer Seitenfläche (56) des Wand- oder Bodenelements (42) abstützt und damit eine Axialkraft (43) auf die Leitung (1) ausübt, wobei der Arretierungsring (3) einem Ausziehen der Leitung (1) unter der Axialkraft (43) entgegenwirkt.

14. Verwendung nach einem der vorstehenden Ansprüche, bei welcher die Leitung (1), wenn sie der Arretierungsring (3) in der verspreizten Stellung verspreizt in der Öffnung (41) hält, zusätzlich mit einem weiteren Befestigungsmittel befestigt wird, vorzugsweise mit einem Schaummaterial, das zumindest anteilig in einen Ringraum zwischen der Leitung (1) und einer die Öffnung (41) begrenzenden Laibung (40) eingebracht wird.

## Claims

1. Use of a line (1) for mounting in an opening (41) in a wall or floor element (42) of a building,
using a locking ring (3) arranged on the line (1),
wherein the locking ring (3) is placed with the line (1) at or in the opening (41) in the wall or floor element (42) and holds the line (1) in a spread position in the opening (41) in the wall or floor element (42),
wherein the locking ring (3) takes on the spread position by itself,
for this purpose, the locking ring (3) has a plurality of hooking ribs (30.1,30.2,30.3) which are distributed around the circumference with respect to a central axis (31) of the opening (41) and which protrude inwardly and/or outwardly.

2. Use according to claim 1, wherein the opening (41) is a drilled hole in the wall or floor element (42) of the building.

3. Use according to claim 1 or 2, wherein the locking ring (3) is arranged in the opening (41) in the spread position and at least some (30.2) of the hooking ribs (30.1, 30.2, 30.3) lock in the spread position against a soffit (40) defining the opening (41).

4. Use according to claim 1 or 2, wherein the locking ring (3) is placed at the opening (41) and, in the spread position, is supported against a side surface (56) of the wall or floor element (42).

5. Use according to claim 4, wherein the locking ring (3) is pushed out of the opening (41) into the spread position, at least some (30.3) of the hooking ribs (30.1, 30.2, 30.3) widening outwardly when pushed out of the opening (41) and bearing against the lateral surface (56) of the floor element (42) under axial tension on the line (1) in a direction opposite to the outwardly pushing direction (55).

6. Use according to claim 5, wherein the locking ring (3) is pushed through the opening (41), i.e. before being pushed out, it is inserted into the opening (41) from an opposite side (80) to the side surface (56).

7. Use according to any one of the preceding claims, wherein at least some (30.1) of the hooking ribs (30.1, 30.2, 30.3) hook onto an outer wall (2) of the line (1) in the spread position.

8. Use according to claim 3 or 7, wherein the inwardly or outwardly protruding hooking ribs (30.1, 30.2) are not only circumferentially distributed, but are also arranged axially one after the other.

9. Use according to any one of the preceding claims, wherein at least some of the hooking ribs (30.1-30.3), when an axial force (43) is applied to the line (1), resist extraction of the line (1) under the effect of the axial force (43).

10. Use according to any one of the preceding claims, wherein at least some of the hooking ribs (30.1-30.3), when a torque (60) is applied to the line (1), resist twisting of the line (1) under the effect of the torque (60).

11. Use according to any one of the preceding claims, wherein the hooking ribs (30.1-30.3) are provided in metal, preferably the entire locking ring (3) is provided in metal.

12. Use according to claim 11, wherein the locking ring (3) is a stamped bent part.

13. Use according to any one of the preceding claims, wherein a flange element (4) arranged on the line (1) is supported on a side face (56) of the wall or floor element (42) and thus exerts an axial force (43) on the line (1), the locking ring (3) counteracting a withdrawal of the line (1) under the effect of the axial force (43).

14. Use according to any one of the preceding claims, wherein the line (1), when held in the spread position by the locking ring (3) in the opening (41), is additionally fixed by another fixing means, preferably by a foam material which is introduced at least partly into an annular space between the line (1) and a soffit (40) defining the opening (41).

## Revendications

1. Utilisation d'une conduite ou ligne (1) pour le montage dans une ouverture (41) dans un élément de paroi ou de sol (42) d'un bâtiment,
plus précisément en utilisant une bague d'arrêt (3) dispose sur la conduite ou ligne (1),
la bague d'arrêt (3) étant placée avec la conduite ou ligne (1) contre l'ouverture (41) ou dans l'ouverture (41) dans l'élément de paroi ou de sol (42) et maintenant la conduite ou ligne (1) dans une position écartée dans l'ouverture (41) dans l'élément de paroi ou de sol (42),
la bague d'arrêt (3) prenant d'elle-même la position d'écartement,
la bague d'arrêt (3) présentant à cet effet plusieurs nervures d'accrochage (30.1, 30.2, 30.3), réparties sur tout le pourtour par rapport à un axe médian (31) de l'ouverture (41), qui font saillie vers l'intérieur et/ou l'extérieur.

2. Utilisation selon la revendication 1, dans laquelle l'ouverture (41) est un trou dans l'élément de paroi ou de sol (42) du bâtiment.

3. Utilisation selon la revendication 1 ou 2, dans laquelle la bague d'arrêt (3) est disposée dans l'ouverture (41) en position écartée et au moins certaines (30.2) des nervures d'accrochage (30.1, 30.2, 30.3) s'accrochent à une embrasure (40) délimitant l'ouverture (41) en position écartée.

4. Utilisation selon la revendication 1 ou 2, dans laquelle la bague d'arrêt (3) est placée contre l'ouverture (41) et prend appui, dans la position écartée, contre une surface latérale (56) de l'élément de paroi ou de sol (42).

5. Utilisation selon la revendication 4, dans laquelle la bague d'arrêt (3) est poussé hors de l'ouverture (41) dans la position écartée, au moins certaines (30.3) des nervures d'accrochage (30.1, 30.2 30.3) s'élargissant vers l'extérieur lors de la poussée hors de l'ouverture (41) et s'appliquant contre la surface latérale (56) de l'élément de paroi ou de sol (42) sous une traction axiale sur la conduite ou ligne (1), dans une direction opposée à la direction de poussée vers l'extérieur (55).

6. Utilisation selon la revendication 5, dans laquelle la bague d'arrêt (3) est poussée à travers l'ouverture (41), c'est-à-dire qu'avant d'être poussée vers l'extérieur, elle est insérée dans l'ouverture (41) par un côté (80) opposé à la surface latérale (56).

7. Utilisation selon l'une quelconque des revendications précédentes, dans laquelle au moins certaines (30.1) des nervures d'accrochage (30.1, 30.2, 30.3) s'accrochent à une paroi extérieur (2) de la conduite ou ligne (1) en position écartée.

8. Utilisation selon la revendication 3 ou 7, dans laquelle les nervures d'accrochage (30.1, 30.2) faisant saillie vers l'intérieur ou vers l'extérieur sont non seulement réparties de manière circonférentielle, mais sont également disposées axialement les unes à la suite des autres.

9. Utilisation selon l'une quelconque des revendications précédentes, dans laquelle au moins certaines des nervures d'accrochage (30.1-30.3), lorsqu'une force axiale (43) est appliquée sur la conduite ou ligne (1), s'opposent à l'extraction de la conduite ou ligne (1) sous l'effet de la force axiale (43).

10. Utilisation selon l'une quelconque des revendications précédentes, dans laquelle au moins certaines des nervures d'accrochage (30.1-30.3), lorsqu'un couple (60) est appliqué à la conduite ou ligne (1), s'opposent à la torsion de la conduite ou ligne (1) sous l'effet du couple (60).

11. Utilisation selon l'une quelconque des revendications précédentes, dans laquelle les nervures d'accrochage (30.1-30.3) sont prévues en métal, de préférence l'ensemble de la bague d'arrêt (3) est prévue en métal.

12. Utilisation selon la revendication 11, dans laquelle la bague d'arrêt (3) est une pièce pliée par estampage.

13. Utilisation selon l'une quelconque des revendications précédentes, dans laquelle un élément de bride (4) disposé sur la conduite ou ligne (1) prend appui sur une face latérale (56) de l'élément de paroi ou de sol (42) et exerce ainsi une force axiale (43) sur la conduite ou ligne (1), la bague d'arrêt (3) s'opposant à une extraction de la conduite ou ligne (1) sous l'effet de la force axiale (43).

14. Utilisation selon l'une quelconque des revendications précédentes, dans laquelle la conduite ou ligne (1), lorsque la bague d'arrêt (3) la maintient écartée dans l'ouverture (41) en position écartée est en outre fixée par un autre moyen de fixation, de préférence par un matériau en mousse qui est introduit au moins en partie dans un espace annulaire entre la conduite ou ligne (1) et une embrasure (40) délimitant l'ouverture (41).
